Europäisches Patentamt

European Patent Office

Office européen des brevets

(19)

(11) **EP 0 555 596 B1**

(12) **FASCICULE DE BREVET EUROPEEN**

(45) Date de publication et mention
de la délivrance du brevet:
**09.04.1997 Bulletin 1997/15**

(51) Int Cl.⁶: **H04B 7/24**, H04L 5/14

(21) Numéro de dépôt: **92400266.0**

(22) Date de dépôt: **31.01.1992**

(54) **Procédé pour déterminer le temps de propagation entre la station terminale distante et la station terminale centrale dans un réseau de transmission bidirectionnelle du type point-multipoints**

Verfahren zur Bestimmung der Laufzeit zwischen einer entfernten Endstation und einer zentralen Endstation, in einem bidirektionalen Punkt-zu-Mehrpunkt-Übertragungssystem

Method for determining the propagation time between a remote terminal station and a central terminal station, in a bidirectional point-to-multipoint transmission system

(84) Etats contractants désignés:
**AT BE CH DE ES FR GB IT LI NL SE**

(43) Date de publication de la demande:
**18.08.1993 Bulletin 1993/33**

(73) Titulaires:
• **ALCATEL CIT**
**75008 Paris (FR)**
Etats contractants désignés:
**CH DE ES FR GB IT LI NL SE AT**
• **ALCATEL BELL Naamloze Vennootschap**
**B-2018 Antwerpen 1 (BE)**
Etats contractants désignés:
**BE**

(72) Inventeurs:
• **Marcel, François**
**F-91400 Orsay (FR)**

• **Sallaerts, Dany, c/o Bell Telephone Man. Co. S.A.**
**B-2018 Anvers (BE)**
• **Allaire, Serge**
**F-27170 Beaumont Le Roger (FR)**
• **Dore, Pierre**
**F-92300 Levallois-Perret (FR)**

(74) Mandataire: **El Manouni, Josiane et al**
**ALCATEL ALSTHOM,**
**Département de Propriété Industrielle,**
**30, avenue Kléber**
**75116 Paris (FR)**

(56) Documents cités:
**EP-A- 0 188 117**        **EP-A- 0 208 021**
**FR-A- 2 636 482**        **GB-A- 2 095 516**

**Description**

La présente invention concerne les réseaux de transmission du type point-multipoints permettant des transmissions entre une station dite station centrale d'une part et des stations dites stations distantes d'autre part.

La présente invention concerne plus particulièrement de tels réseaux comportant, entre le point correspondant à ladite station centrale et un point appelé point de concentration, un support de transmission partagé dans le temps entre les différentes stations distantes, et, entre ledit point de concentration et chacun des points correspondant à une station distante, un support de transmission propre à chacune de ces stations distantes et de longueur variable en fonction de la position de ces stations distantes par rapport au point de concentration.

La présente invention est notamment applicable aux réseaux dits de distribution utilisés dans la partie terminale, proche des usagers, d'un réseau de télécommunications, et particulièrement à de tels réseaux de distribution dans lesquels lesdits supports de transmission sont des fibres optiques et ledit point de concentration est un coupleur optique passif.

La présente invention concerne plus particulièrement le cas où ledit partage de support de transmission est effectué suivant la technique dite AMRT (Accès Multiple à Repartition Temporelle) c'est-à-dire avec un format de transmission comportant différents emplacements temporels affectés, de façon prédéterminée, respectivement aux différentes stations distantes.

Pour la transmission dans un sens dit montant, à savoir des stations distantes vers la station centrale, se pose alors le problème de la détermination des instants d'émission par les différentes stations distantes, afin que les informations ainsi émises se retrouvent bien, une fois sur le support commun, dans les emplacements temporels qui leur ont été respectivement affectés.

On sait résoudre ce problème en prévoyant, dans chaque station distante, un retard à l'émission déterminé de façon à compenser la différence de temps de propagation, vers la station centrale, entre la station distante considérée et une station distante prise pour référence.

Le temps de propagation entre une station distante et la station centrale est en outre généralement déterminé en mesurant, dans la station centrale, le temps séparant un instant de référence d'émission de signaux dits d'information par cette station centrale, de l'instant de réception, par cette station centrale, d'un signal, dit de positionnement, émis par cette station distante, avec un retard par rapport à un instant de référence de réception, par cette station distante, desdits signaux d'information, déterminé de façon à ce que les différents signaux de positionnement émis par les différentes stations distantes puissent être reçus dans une période de temps déterminée, dite fenêtre de positionnement, non affectée à la réception de signaux d'information.

Ce procédé de mesure de temps de propagation est décrit par exemple FR-A-2 636 482.

Ce procédé a pour inconvénient de nécessiter une fenêtre de positionnement de largeur relativement importante, comprenant toutes les positions intermédiaires de signaux de positionnement susceptibles de se trouver entre des positions extrêmes correspondant respectivement à la station distante la plus proche de la station centrale et à la station distante la plus éloignée de la station centrale.

La présente invention a pour objet un procédé pour déterminer le temps de propagation entre station distante et station centrale dans un réseau de transmission bidirectionnelle point-multipoints, dans lequel ladite fenêtre de positionnement peut avoir une largeur très inférieure à celle indiquée ci-dessus.

La présente invention est applicable aussi bien au cas où un même support est utilisé pour la transmission dans les deux sens de transmission, suivant un mode de transmission dit à l'alternat, qu'au cas où deux supports distincts sont utilisés pour la transmission dans ces deux sens.

La présente invention a pour objet un procédé pour déterminer le temps de propagation entre station terminale distante et station terminale centrale dans un réseau de transmission bidirectionnelle du type point-multipoints, ledit procédé comportant une mesure, par la station centrale, de l'intervalle de temps séparant un instant de référence d'émission de signaux d'information par ladite station centrale, de la réception, par cette station centrale, d'un signal dit de positionnement émis par une station distante, un temps de retard après un instant de référence de réception desdits signaux d'information par cette station distante, de façon à ce que ledit signal de positionnement soit reçu, par la station centrale, dans une période de temps déterminée, dite fenêtre de positionnement, non affectée à la réception, par cette station centrale, de signaux d'information, et ledit procédé étant essentiellement caractérisé en ce que ledit temps de retard est, pour une même station distante, susceptible de varier dans le temps à partir d'une valeur initiale telle que le signal de positionnement n'est pas nécessairement reçu dans ladite fenêtre, et ladite émission de signal de positionnement est alors, pour une même station distante, susceptible d'être répétée, jusqu'à ce que ledit signal de positionnement soit effectivement reçu par la station centrale dans ladite fenêtre.

D'autres objets et caractéristiques de la présente invention apparaîtront à la lecture de la description suivante d'exemples de réalisation, faite en relation avec les dessins ci-annexés dans lesquels :

- la figure 1 est un diagramme illustrant le procédé suivant l'invention dans le cas d'un système de transmission bidirectionnelle, à l'alternat, utilisant un même support pour les deux sens de transmission,

- la figure 2 est un diagramme illustrant le procédé suivant l'invention dans le cas d'un système de transmission bidirectionnelle utilisant deux supports distincts pour les deux sens de transmission.

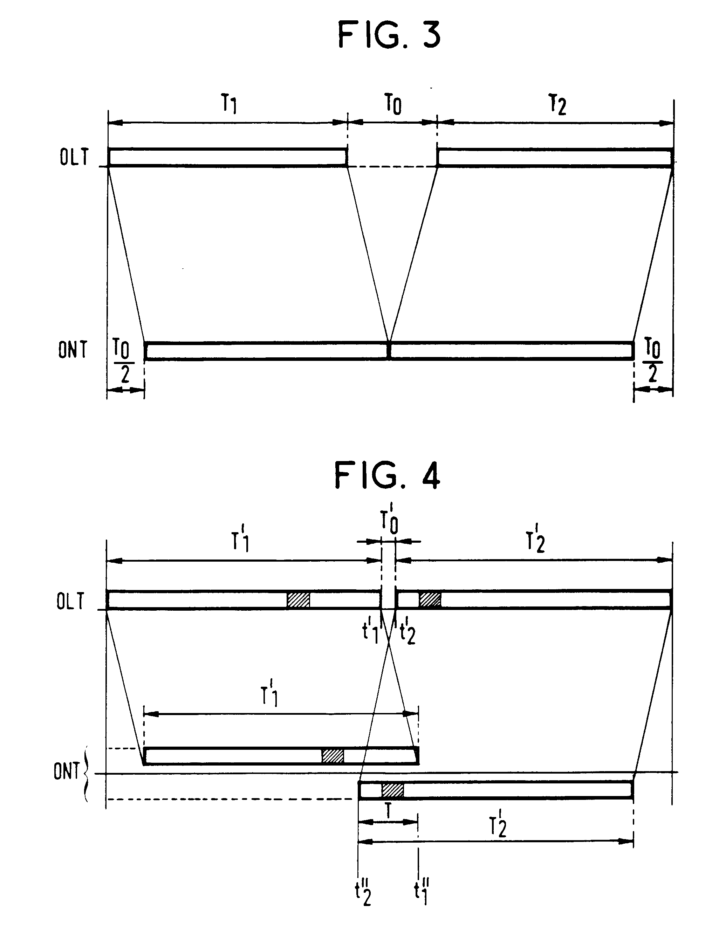

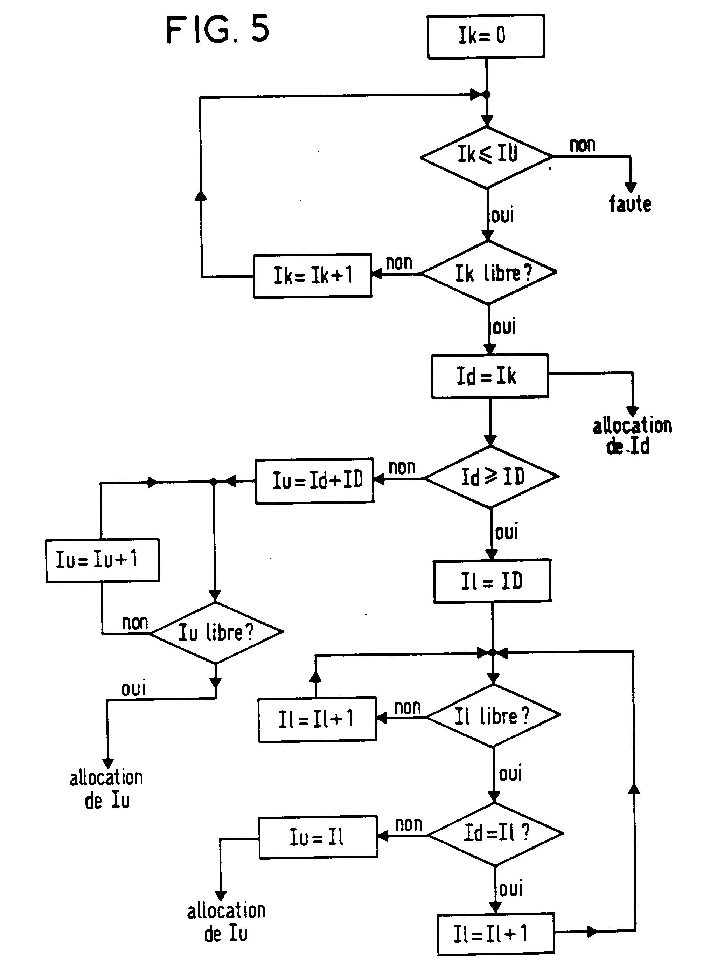

- les figures 3, 4 et 5 sont destinées à illustrer un exemple d'application de la présente invention, consistant dans l'utilisation conjointe de ce procédé et d'un procédé particulier d'allocation d'emplacements temporels pour transmission dans un réseau de transmission bidirectionnelle du type point-multipoint, à accès multiple par répartition temporelle, et à l'alternat, un tel procédé d'allocation étant illustré sur la figure 5, et permettant d'obtenir un format de transmission particulier tel qu'illustré sur la figure 4, se distinguant du format de transmission classiquement obtenu dans un tel réseau, et rappelé sur la figure 3.

Dans les exemples ainsi décrits, la largeur de la fenêtre de positionnement sera choisie relativement faible, et en tout cas inférieure à celle qui serait nécessaire conformément à l'art antérieur exposé plus haut; cette fenêtre sera aussi appelée fenêtre de largeur réduite.

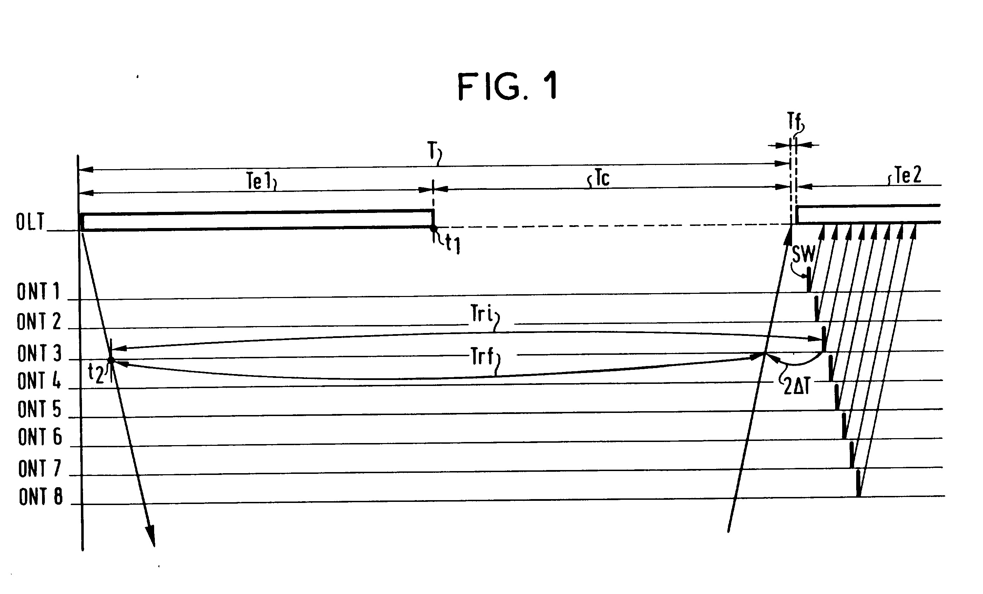

Soit T la période de transmission de la station centrale. Sur la figure 1, cette période de transmission inclut une période de temps affectée à l'émission et une période de temps affectée à la réception. Sur la première ligne du diagramme de la figure 1 est ainsi référencée Te la période d'émission dans le sens descendant, à savoir de la station centrale, notée OLT, vers "n" stations distantes, prises à titre d'exemple en nombre "n" égal à huit et notées respectivement ONT1, ONT2....ONT8. Deux périodes d'émission successives, notées respectivement Te1 et Te2 sont ainsi représentées sur la figure 1.

Dans les exemples de réalisation décrits, le format de transmission dans le sens descendant comporte au moins un emplacement temporel réservé à la transmission de signaux d'information particuliers, dits de signalisation, destinés à l'ensemble de ces stations.

Ces signaux de signalisation comportent, dans ces exemples, un signal dit d'adressage d'une station distante parmi "n", en vue de déclencher l'émission, par cette station distante, d'un signal de positionnement, noté SW. Contrairement à ce qui est le cas pour d'autres signaux de signalisation qui seront vus dans ce qui suit, l'émission de signaux d'adressage n'est subordonnée à aucune condition; elle est donc systématique et cyclique, les "n" stations distantes étant par exemple adressées à tour de rôle.

L'instant de réception d'un signal de positionnement, mesuré par la station centrale, par rapport à un instant de référence d'émission par cette station centrale, permet de connaître le temps de propagation entre cette station distante et la station centrale. Cet instant de référence, noté t1, est par exemple constitué par la fin de la période d'émission Te1.

Le signal de positionnement est émis par la station distante ainsi adressée, un temps de retard après un instant de référence de réception par cette station distante, cet instant de référence, noté t2, étant par exemple le début de la période de réception par la station distante, comme illustré à la quatrième ligne du diagramme pour la station ONT3 par exemple.

Ledit retard est en l'occurence susceptible de varier dans le temps, à partir d'une valeur de retard initiale telle que le signal de positionnement correspondant n'est pas nécessairement reçu dans la fenêtre de positionnement de largeur réduite, notée Tf, prévue à la station centrale dans la période de temps T-Te.

Dans les exemples de réalisation décrits, les signaux de signalisation comportent en outre un signal dit d'indication de non réception de signal de positionnement dans la fenêtre de positionnement.

Dans le cas où le signal de positionnement n'est pas reçu dans cette fenêtre, ce qui est indiqué par ce signal d'indication de non réception de signal de positionnement dans la fenêtre de positionnement, la prochaine émission de signal de positionnement par la station distante considérée (déclenchée, comme il a été indiqué ci-dessus, par un signal d'adressage) est effectuée avec un retard différent du précédent et tendant, sinon à faire tomber le signal de positionnement dans cette fenêtre de positionnement de largeur réduite, du moins à l'en rapprocher. Ce retard est par exemple obtenu en incrémentant automatiquement le retard précédent d'une valeur déterminée égale au pas de variation de ce retard.

Avantageusement, dans le cas où le signal de positionnement n'est pas reçu dans la fenêtre de positionnement de largeur réduite pour la valeur initiale de ce retard, la période de temps dans laquelle est reçu le signal de positionnement pour cette valeur initiale et pour les éventuelles valeurs intermédiaires comprises entre la valeur initiale et la valeur finale du retard pour laquelle le signal de positionnement est reçu dans cette fenêtre, est, quel que soit le système de transmission bidirectionnelle considéré (sur deux supports distincts ou à l'alternat sur un même support) une période de temps non affectée à la réception, par la station centrale, de signaux d'information, afin d'éviter toute possibilité de collision entre signaux d'information et de positionnement reçus par la station centrale.

Avantageusement encore, dans le cas de transmission bidirectionnelle à l'alternat sur un même support pour les deux sens de transmission, cette période de temps est une période de temps affectée à l'émission par la station centrale. En effet les problèmes liés à des collisions entre signaux d'information émis par la station centrale et signaux de positionnement émis par une station distante peuvent alors être résolus en choisissant, dans cette station centrale, des moyens de couplage émission-réception suffisamment performants pour que le niveau des signaux de positionnement reçus par cette station soit sans effet sur les signaux d'information émis par cette station.

Avantageusement encore, et comme illustré sur la figure 1, cette période de temps affectée à l'émission par la station centrale, est celle, notée Te2, qui suit celle notée Te1 comportant l'instant de référence t1, la fenêtre de positionnement de largeur réduite précédant en l'occurence immédiatement la période de temps Te2.

Le retard initial, noté Tri, sera alors avantageusement, comme illustré sur la figure 1, choisi égal à la durée T de la période de transmission. Dans ce cas, quelle que soit la station distante, le signal de positionnement n'est effectivement pas reçu dans la fenêtre de positionnement pour cette valeur initiale, et la variation du retard se fait alors, comme illustré sur la figure 1, par décroissance à partir de cette valeur initiale, jusqu'à une valeur finale notée Trf.

Il serait aussi possible de choisir une valeur de retard initiale inférieure à T, auquel cas la variation de ce retard se ferait par croissance à partir de cette valeur initiale.

Il serait aussi possible de prévoir comme période de temps affectée à l'émission, et dans laquelle tomberait le signal de positionnement pour les valeurs initiale et intermédiaires du retard, la période de temps Te1 contenant l'instant de référence t1 considéré, la fenêtre de positionnement de largeur réduite suivant par exemple immédiatement cette période de temps Te1.

Dans le cas ainsi considéré de transmission bidirectionnelle à l'alternat sur un même support, le pas de variation dudit retard est en outre avantageusement choisi égal à la largeur de la fenêtre de positionnement de largeur réduite.

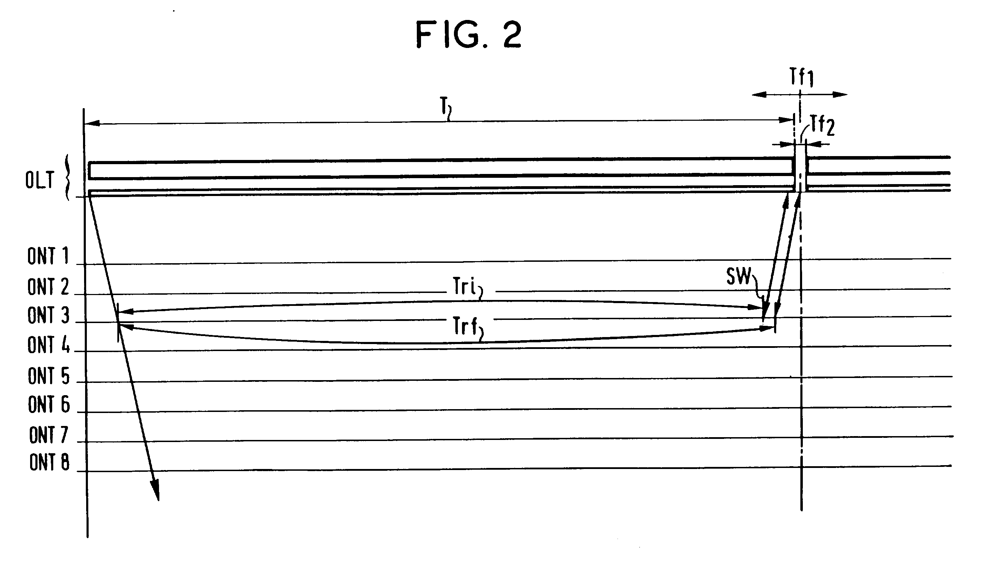

Dans le cas, illustré sur la figure 2, de transmission bidirectionnelle sur deux supports séparés, les périodes d'émission et de réception par la station centrale, notées Te et Tr et illustrées respectivement sur la première et la deuxième ligne du diagramme de la figure 1 peuvent occuper la durée totale de la période de transmission T , à la largeur près de la fenêtre de positionnement de largeur réduite.

Cette fenêtre de positionnement a en outre avantageusement, afin de réduire le temps nécessaire à la recherche de la valeur finale de retard pour laquelle le signal de positionnement tombe dans cette fenêtre, une largeur variable dans le temps, ayant, en l'occurence dans un premier temps, une première largeur, étant alors notée Tf1, et dans un deuxième temps, une deuxième largeur inférieure à la première, étant notée Tf2, et le pas de variation dudit retard a, corrélativement, dans un premier temps, une première valeur, avantageusement égale à ladite première largeur, et dans un deuxième temps une deuxième valeur inférieure à la première, et avantageusement égale à ladite deuxième largeur, le procédé étant, pour chacun de ces temps, similaire à celui vu précédemment pour un seul temps, et le passage du premier temps au deuxième temps se produisant une fois le signal de positionnement reçu dans la fenêtre de positionnement ayant pour largeur ladite première largeur.

Dans tous les exemples ainsi considérés, le fait que la station centrale détecte le signal de positionnement dans la fenêtre de largeur réduite (ou de largeur la plus réduite dans le dernier exemple considéré) est indiqué à la station distante considérée, lors de son prochain adressage, au moyen d'un signal de signalisation spécifique, dit de détection de signal de positionnement dans la fenêtre de positionnement. Cette station distante transmet alors la valeur finale de retard Trf à la station centrale. La station centrale peut alors calculer le temps de propagation Δ T recherché, en l'occurence, compte tenu des instants de référence choisis, suivant la formule :

$$2 \Delta T = Te + Tc - Trf$$

où Tc désigne la durée obtenue à l'issue du comptage effectué comme indiqué plus haut, dans la station centrale, et où Te désigne la période d'émission par la station centrale. On notera que quels que soient les instants de référence choisis, le calcul du temps de propagation nécessite ainsi, suivant l'invention :

- une mesure, par la station centrale, de l'intervalle de temps séparant l'instant de référence d'émission de signaux d'information par cette station centrale, de l'instant de réception, par cette station centrale, d'un signal de positionnement émis par une station distante un temps de retard après l'instant de référence de réception desdits signaux d'information par cette station distante, ce temps de retard étant déterminé pour que ce signal de positionnement soit effectivement reçu dans la fenêtre de positionnement considéré,
- une détermination, par cette station distante, de la valeur, dite finale, de retard, Trf, pour laquelle ce signal de positionnement est effectivement reçu dans cette fenêtre.

Lorsque le calcul du temps de propagation est effectué dans la station centrale, la valeur Trf est transmise par la station distante à la station centrale. Cette transmission de la valeur finale de retard Trf peut par exemple être effectuée au moyen d'un signal d'information particulier, également dit de signalisation, utilisé pour la transmission dans le sens montant.

Dans tous les exemples ainsi considérés, il est en outre avantageusement mis en oeuvre une procédure de variation de niveau dudit signal de positionnement, depuis une valeur extrême (minimale ou maximale) jusqu'à une valeur intermédiaire, variable en fonction de la station distante considérée et permettant l'obtention, à la station centrale, d'un niveau sensiblement identique pour les différentes stations distantes.

Le sens de la variation à appliquer, à cette fin, au niveau d'émission du signal de positionnement par la station distante, est par exemple déterminé à la station centrale et transmis à la station distante par l'intermédiaire d'un signal de signalisation spécifique dit de commande de variation de niveau.

La commande proprement dite du niveau d'émission du signal de positionnement peut être réalisée par tout moyen classique, non redécrit ici.

On notera que le récepteur prévu à la station centrale sera avantageusement choisi de manière à présenter une dynamique de réception la plus élevée possible afin de pouvoir recevoir à priori tout niveau émis par une station distante située à une distance quelconque de la station centrale.

Cette exigence quant à la qualité de ce récepteur peut se révéler moins contraignante dans le cas où la variation de ce niveau d'émission est effectuée en augmentant ce niveau à partir d'une valeur minimale, plutôt qu'en le réduisant à partir d'une valeur maximale.

On notera en outre que le seuil de détection de ce récepteur sera avantageusement choisi relativement bas lorsqu'il s'agit de détecter un signal de positionnement, afin d'accroître la probabilité de détection d'un tel signal, et relativement plus élevé lorsqu'il s'agit de détecter des signaux d'information, afin d'optimiser les conditions de réception de ces signaux d'information.

On notera également que dans le cas où ladite variation de niveau d'émission est effectuée en réduisant ce niveau à partir d'une valeur maximale, cette variation peut être effectuée une fois le signal de positionnement détecté dans la fenêtre de positionnement de largeur réduite (ou de largeur la plus réduite dans le dernier exemple considéré).

On notera par ailleurs que dans le cas où ladite variation de niveau d'émission est effectuée en augmentant ce niveau à partir d'une valeur minimale, on peut, suivant ladite valeur minimale, être amené à effectuer une telle variation de niveau, non seulement en vue de l'obtention, à la station centrale, d'un niveau sensiblement identique pour les différentes stations distantes, comme indiqué ci-dessus, mais également pour pouvoir détecter le signal de positionnement, à la station centrale, dans la fenêtre de positionnement, de largeur réduite (ou de largeur la plus réduite dans le dernier exemple considéré). Deux conditions doivent alors être remplies pour pouvoir détecter un signal de positionnement dans la fenêtre de positionnement considérée, ces deux conditions étant, l'une qu'il ait été émis avec un retard adéquat, comme indiqué plus haut, et d'autre part qu'il ait un niveau suffisant. Par exemple, si le signal d'indication de non réception de signal de positionnement dans la fenêtre de positionnement indique une telle non détection, pour une valeur de retard et pour une valeur de niveau déterminées, tout ou partie de la plage de variation de niveau sera systématiquement explorée (par exemple par incrémentation systématique du niveau précédent d'une valeur déterminée égale au pas de variation de ce niveau) avant de passer éventuellement à la valeur de retard suivante.

Un cas avantageux d'application de la présente invention consiste dans le cas où il est simultanément recherché, parallèlement à la réduction de la largeur de la fenêtre de positionnement, une réduction de la largeur des intervalles de temps, prévus dans le format de transmission utilisé, pour tenir compte des temps de propagation, et non utilisables pour transmettre des informations, comme expliqué maintenant en relation avec les figures 3, 4 et 5.

Sur la figure 3, la durée d'une trame émise par la station centrale (notée OLT) et reçue par une station distante (notée ONT), dite aussi trame descendante, est notée $T_1$, la durée d'une trame émise par une station distante et reçue par la station centrale, dite aussi trame montante, est notée $T_2$, (avec par exemple $T_1 = T_2$) et la durée d'un intervalle de temps non utilisable, comme rappelé plus haut, pour transmettre des informations, est notée $T_o$.

Sur la figure 4, la durée de la trame descendante est notée $T'_1$, avec $T'_1 > T_1$, la durée de la trame montante est notée $T'_2$, avec $T'_2 > T_2$ (et avec par exemple $T'_1 = T'_2$) et la durée d'un intervalle de temps non utilisé pour transmettre des informations est notée $T'_o$ avec $T'_o < T_o$. Dans cet exemple cette durée $T'_o$ n'est pas nulle, mais le procédé suivant l'invention n'exclut pas que $T'_o$ puisse être nul.

Un procédé d'allocation d'emplacements temporels maintenant décrit en relation avec la figure 5, et permettant d'obtenir un format de transmission du type décrit sur la figure 4 est basé sur l'observation que, le système de transmission étant, comme indiqué plus haut, du type à accès multiple par répartition temporelle, une station distante peut être autorisée à émettre pendant qu'elle reçoit des informations destinées à une autre station distante.

Ceci suppose que la directivité du coupleur utilisé pour réaliser ledit point de concentration, dans le système point-multipoint considéré, est suffisamment élevée pour que les réflexions vers les autres stations distantes, consécutives à une telle émission par une station distante, puissent être considérées comme négligeables.

Ceci suppose par ailleurs que la récupération d'horloge effectuée en réception dans une station distante soit telle qu'elle puisse continuer à fournir ladite horloge au moment d'une interruption de la réception pour effectuer une telle émission.

Dans l'exemple de réalisation considéré , la durée $T_0 - T'_0$ devenue, grâce au procédé d'allocation maintenant décrit, utilisable pour effectuer une transmission d'information, est répartie également entre la trame descendante et la trame montante.

Comme indiqué ci-dessus, ce procédé s'applique au cas de transmission suivant la technique dite AMRT (Accès Multiple à Repartition Temporelle) c'est-à-dire avec un format de transmission structuré en trames, montantes ou descendantes, comportant différents emplacements temporels affectés, de façon prédéterminée, respectivement aux différentes stations distantes.

Ce procédé d'allocation d'emplacements temporels vise à allouer, pour la transmission entre la station centrale et une station distante, et tel qu'illustré de façon schématique sur la figure 4, au moins un emplacement dans la trame descendante et au moins un emplacement dans la trame montante, le nombre d'emplacements à allouer étant fonction de la quantité d'informations à transmettre entre ces stations, et, en cas de pluralité d'emplacements, chacun d'eux étant alloué de façon autonome, suivant le procédé conforme à l'invention, ces différents emplacements n'étant par conséquent pas nécessairement consécutifs.

Ces différents emplacements temporels sont, dans ce qui suit, désignés par des numéros, suivant une numérotation qui :

- dans la station centrale, est attribuée de façon continûment croissante à partir d'une origine prise au début de la trame descendante, et est commune à la trame descendante et à la trame montante (en tenant bien sûr compte de l'intervalle de temps T'o lorsque celui-ci n'est pas nul),
- dans une station distante,

  . pour la trame descendante est attribuée de façon continument croissante à partir d'une origine dite absolue prise au début de la trame descendante,
  . pour la trame montante, comporte un changement d'origine et est attribuée de façon continûment croissante à partir d'une origine, dite relative, prise à l'intérieur de la trame descendante.

L'instant d'origine, $t''_2$, de la trame montante, prise dans une station distante, est en effet déterminé de façon à ce que l'instant d'origine, $t'_2$, de cette trame, prise dans la station centrale, c'est-à-dire compte tenu du temps de propagation entre ces deux stations, coïncide avec le début de l'intervalle de temps $T'_2$. Comme il apparaît sur la figure 4, ceci conduit à prévoir, dans la station distante, un certain recouvrement entre trame descendante et trame montante. Soit ID le numéro d'emplacement, à l'intérieur de la trame descendante, qui coïncide ainsi avec le premier emplacement de la trame montante. On appelle dans ce qui suit zone de recouvrement, notée T sur la figure 4, l'ensemble des emplacements de la trame descendante ayant un numéro compris entre ID (compris) et IU (compris), où IU indique le numéro du dernier emplacement de la trame descendante.

On notera que le numéro ID est variable pour chaque station distante, étant fonction du temps de propagation entre station distante et station centrale.

La détermination de ID nécessite une mesure du temps de propagation, $\Delta T$, entre station distante et station centrale, cette mesure pouvant être effectuée suivant un procédé classique, non redécrit ici. Les paramètres $t''_2$, $t'_2$, et $\Delta T$ sont en effet liés par la relation :

$$t''_2 + \Delta T = t'_2$$

ce qui, connaissant $\Delta T$ et $t'_2$ pour une station distante déterminée, permet de connaître $t''_2$, et donc ID, pour cette station distante.

En d'autres termes, l'instant d'origine $t''_2$ des trames montantes, pris dans une station distante, se situe avant l'instant de fin, $t''1$, des trames descendantes, pris dans cette station distante, et en est séparé de la durée nécessaire pour obtenir le format de transmission recherché à la station centrale, c'est-à-dire pour permettre une réduction, voire une suppression, des intervalles de temps non utilisables pour transmettre des informations.

Soient Id et Lu respectivement un numéro d'emplacement dans la trame descendante et un numéro d'emplacement dans la trame montante, à allouer pour une transmission entre la station centrale et une station distante déterminée, suivant le type de numérotation défini plus haut pour la station distante.

Dans l'exemple maintenant décrit, on suppose que le procédé d'allocation d'emplacements temporels est mis en oeuvre à la station centrale. En outre, dans cet exemple, on commence par affecter un numéro Id d'emplacement dans la trame descendante.

La seule condition à vérifier par le numéro Id est alors de constituer un numéro d'emplacement libre, c'est-à-dire non encore alloué, et d'être inférieur à IU. Tout numéro vérifiant ces conditions peut constituer le numéro Id recherché.

Par exemple, comme indiqué sur l'organigramme de la figure 5, le numéro Id pourra être recherché en envisageant successivement les différents emplacements de la trame descendante à partir du premier, c'est-à-dire à partir de celui ayant, dans l'organigramme de la figure 5, le numéro O, et en vérifiant pour chacun d'eux s'il est disponible, auquel cas s'il n'est pas disponible, on envisage le suivant, et s'il est disponible, son numéro peut constituer le numéro Id recherché.

Le processus correspondant, représenté sur l'organigramme de la figure 5, utilise une variable intermédiaire, notée Ik, qui s'incrémente d'une unité à chaque détection d'indisponibilité d'un emplacement. Par ailleurs la détection d'un numéro Ik supérieur à LU conduit, comme indiqué sur l'organigramme de la figure 5, à délivrer un message de faute.

Pour l'allocation d'un numéro d'emplacement lu dans la trame montante, on procède ensuite de la façon suivante. On détermine tout d'abord, par comparaison du numéro Id ainsi alloué avec le numéro ID défini précedemment, si l'emplacement correspondant au numéro Id ainsi alloué se situe ou non dans la zone de recouvrement.

Si cet emplacement ne se situe pas dans la zone de recouvrement, le numéro Lu est avantageusement déterminé de façon à conserver une symétrie d'allocation d'emplacements dans les trames descendantes et montantes, ce qui, compte tenu du type de numérotation adopté pour la station distante, se traduit par :

$$lu = ID + Id$$

Ce numéro Lu ne peut cependant être retenu comme constituant le numéro Lu recherché que s'il constitue un numéro d'emplacement libre. S'il ne constitue pas un numéro d'emplacement libre, on incrémente par exemple ce numéro d'une unité, puis on refait le même test de disponibilité et ainsi de suite, jusqu'à obtenir un numéro Lu d'emplacement libre, ocmme illustré sur l'organigramme de la figure 5.

Si l'emplacement correspondant au numéro Id ainsi alloué se situe par contre dans la zone de recouvrement, il est nécessaire de vérifier que le choix de l'emplacement lu n'entraîne pas de collision entre émission et réception ce qui, compte tenu de la numérotation adoptée pour la station distante, se traduit par le fait que le numéro lu doit être choisi distinct de Id.

Le numéro lu est par exemple déterminé en envisageant successivement les différents emplacements de la trame montante à partir du premier, c'est-à-dire, compte-tenu du type de numérotation adopté pour la station distante, à partir de celui ayant pour numéro ID, et en vérifiant pour chacun d'eux s'il est disponible, auquel cas, s'il n'est pas disponible on envisage le suivant, et s'il est disponible, on vérifie s'il n'y a pas identité entre le numéro de cet emplacement et le numéro Id affecté précédemment, étant entendu que s'il y a identité, on envisage un emplacement suivant, et que s'il n'y a pas identité, le numéro de cet emplacement peut être retenu comme constituant le numéro lu recherché.

Le processus correspondant, représenté sur l'organigramme de la figure 5, utilise une variable intermédiaire, notée II, qui s'incrémente d'une unité à chaque détection d'indisponibilité d'un emplacement.

Le procédé d'allocation d'emplacements temporels ainsi décrit peut être mis en oeuvre dans la station centrale ou dans les stations distantes, étant entendu que s'il est mis en oeuvre dans les stations distantes, une centralisation des résultats doit être effectuée à la station centrale, et des échanges entre station distante et station centrale sont nécessaires pour sa mise en oeuvre.

## Revendications

1. Procédé pour déterminer le temps de propagation entre station terminale distante (ONT) et station terminale centrale (OLT) dans un réseau de transmission bidirectionnelle du type point-multipoints, procédé comportant une mesure, par la station centrale, de l'intervalle de temps séparant un instant de référence d'émission de signaux d'information par ladite station centrale, de la réception, par cette station centrale, d'un signal (SW) dit de positionnement émis par une station distante, un temps de retard après un instant de référence de réception desdits signaux d'information par cette station distante, de façon à ce que ledit signal de positionnement soit reçu, par la station centrale, dans une période de temps déterminée, dite fenêtre de positionnement, non affectée à la réception, par cette station centrale, de signaux d'information, la fenêtre de positionnement se répètant regulièrement, caractérisé en ce que ledit temps de retard est, pour une même station distante, susceptible de varier à partir d'une valeur initiale (Tri) telle que si le signal de positionnement n'est pas reçu dans la première fenêtre de positionnement, ladite émission de signal de positionnement est alors, pour une même station distante, répétée avec un temps de retard différent, jusqu'à ce que ledit signal de positionnement soit effectivement reçu par la station centrale dans une des fenêtres de positionnement succesives.

2. Procédé selon la revendication 1, caractérisé en ce que ladite fenêtre de positionnement (Tf) a une largeur inférieure à celle qui serait nécessaire pour comprendre toutes les positions intermédiaires de signaux de positionnement susceptibles de se trouver entre des positions extrêmes correspondant respectivement à la station distante la plus proche de la station centrale et à la station distante la plus éloignée de la station centrale.

3. Procédé selon l'une des revendications 1 et 2, caractérisé en ce que dans le cas de transmission bidirectionnelle, à l'alternat, sur un même support de transmission, la période de temps dans laquelle est reçu ledit signal de positionnement pour ladite valeur initiale et pour les éventuelles valeurs intermédiaires comprises entre la valeur initiale et la valeur finale (Trf), pour laquelle ledit signal de positionnement est reçu dans ladite fenêtre est une période de temps (Te) affectée à l'émission de signaux d'information par ladite station centrale.

4. Procédé selon l'une des revendications 1 à 3, caractérisé en ce que le pas de variation dudit retard est égal à la largeur de ladite fenêtre.

5. Procédé selon l'une des revendications 1 et 2, caractérisé en ce que, notamment dans le cas de transmission bidirectionnelle sur deux supports distincts, ladite fenêtre est elle-même de largeur variable dans le temps, ayant dans un premier temps une première largeur (Tf1), et dans un deuxième temps, après réception du signal de positionnement dans la fenêtre de positionnement ayant ladite première largeur, une deuxième largeur (Tf2) inférieure à la première.

6. Procédé selon la revendication 5, caractérisé en ce que le pas de variation dudit retard est dans ledit premier temps égal à ladite première largeur, et dans ledit deuxième temps, égal à ladite deuxième largeur.

7. Procédé selon l'une des revendications 1 à 6, caractérisé en ce le niveau dudit signal de positionnement est en outre susceptible de varier, depuis une valeur extrême jusqu'à une valeur permettant l'obtention, à la station centrale, d'un niveau sensiblement identique pour les différentes stations distantes.

8. Procédé selon la revendication 7, caractérisé en ce que le sens de la variation à appliquer au niveau du signal de positionnement, par une station distante, pour obtenir le niveau recherché, est déterminé à la station centrale puis transmis à la station distante considérée au moyen d'un signal spécifique, dit signal de commande de variation de niveau.

9. Procédé selon l'une des revendications 1 à 8, caractérisé en ce que ladite variation de temps de retard est commandée par un signal spécifique, dit d'indication de non réception de signal de positionnement dans la fenêtre de positionnement, émis par la station centrale.

10. Procédé selon l'une des revendications 7 à 9, caractérisé en ce que dans le cas où ladite variation de niveau de signal de positionnement est effectuée à partir d'une valeur minimale, elle est en outre effectuée en vue de porter ce niveau à une valeur suffisante pour permettre sa détection, par la station centrale.

11. Procédé selon les revendications 9 et 10, caractérisé en ce que ladite variation de niveau effectuée en vue de porter ce niveau à une valeur suffisante pour permettre sa détection, par la station centrale, est également commandée par ledit signal d'indication de non réception de signal de positionnement dans la fenêtre de positionnement.

**Patentansprüche**

1. Verfahren zur Bestimmung der Signallaufzeit zwischen einer entfernten Station (ONT) und einer Zentralstation (OLT) in einem bidirektionalen Nachrichtenübertragungsnetz vom Typ Punkt-Vielfachpunkt, wobei gemäß diesem Verfahren in der Zentralstation das Zeitintervall zwischen einem Bezugszeitpunkt der Aussendung von Informationssignalen durch diese zentrale Station und dem Empfang eines von der entfernten Station ausgesendeten Positioniersignals (SW) in der zentralen Station gemessen wird, wobei das Positioniersignal um einen Zeitraum nach einem Empfangsbezugszeitpunkt der Informationssignale durch diese entfernte Station ausgesendet wird, so daß das Positioniersignal in der zentralen Station in einer bestimmten Zeitperiode, Positionierfenster genannt, empfangen wird, die nicht dem Empfang von Informationssignalen in der Zentralstation zugewiesen ist und sich regelmäßig wiederholt, dadurch gekennzeichnet, daß die Verzögerungszeit für eine gegebene entfernte Station ausgehend von einem Ursprungswert (Tri) so variieren kann, daß das Positioniersignal, wenn es nicht in dem ersten Positionierfenster empfangen wird, dann für eine gegebene entfernte Station wiederholt mit einer anderen Verzögerung ausgesendet wird, bis das Positioniersignal tatsächlich in der Zentralstation in einem der aufeinanderfolgenden Positionierfenster empfangen wird.

2. Verfahren nach Anspruch 1, dadurch gekennzeichnet, daß das Positionierfenster (Tf) eine geringere Breite besitzt als nötig wäre, um alle Zwischenlagen von Positioniersignalen zu umfassen, die zwischen den extremen Lagen entsprechend der der Zentralstation am nächsten liegenden entfernten Station und der von der Zentralstation am weitesten entfernt liegenden Station liegen können.

3. Verfahren nach einem der Ansprüche 1 und 2, dadurch gekennzeichnet, daß im Fall einer bidirektionalen Übertragung im Halbduplexmodus auf einem gemeinsamen Übertragungsträger die Zeitperiode, in der das Positioniersignal für den ursprünglichen Wert und für eventuelle Zwischenwerte empfangen wurde, die zwischen dem ursprünglichen Wert und dem endgültigen Wert (Trf) liegen, für den das Positioniersignal in dem Fenster empfangen wird, eine Zeitperiode (Te) ist, die der Aussendung von Informationssignalen durch die zentrale Station zugewiesen ist.

4. Verfahren nach einem der Ansprüche 1 bis 3, dadurch gekennzeichnet, daß der Variationsschritt der Verzögerung der Breite des Fensters gleicht.

5. Verfahren nach einem der Ansprüche 1 und 2, dadurch gekennzeichnet, daß insbesondere im Fall der bidirektionalen Übertragung auf zwei getrennten Informationsträgern das Fenster selbst eine zeitlich variable Breite besitzt, und zwar in einer ersten Phase eine erste Breite (Tf1) besitzt und in einer zweiten Phase nach Empfang des Positioniersignals im Positionierfenster mit der ersten Breite eine zweite Breite (Tf2) annimmt, die kleiner als die erste ist.

6. Verfahren nach Anspruch 5, dadurch gekennzeichnet, daß der Variationsschritt der Verzögerung in der ersten Phase der ersten Breite und in der zweiten Phase der zweiten Breite gleicht.

7. Verfahren nach einem der Ansprüche 1 bis 6, dadurch gekennzeichnet, daß der Pegel des Positioniersignals außerdem von einem Extremwert bis zu einem Wert variieren kann, der die Erfassung eines im wesentlichen für alle verschiedenen entfernten Stationen gleichen Pegels in der Zentralstation erlaubt.

8. Verfahren nach Anspruch 7, dadurch gekennzeichnet, daß die Richtung der Veränderung des für das Positioniersignal anzuwendenden Pegels in der entfernten Station, um den gewünschten Pegel zu erzielen, in der Zentralstation bestimmt wird und an die betreffende entfernte Station über ein spezielles Signal übertragen wird, das Pegelvariationssteuersignal genannt wird.

9. Verfahren nach einem der Ansprüche 1 bis 8, dadurch gekennzeichnet, daß die Veränderung der Verzögerungszeit durch ein spezielles Signal gesteuert wird, das den Nichtempfang des Positioniersignals in dem Positionierfenster angibt und von der Zentralstation ausgesendet wird.

10. Verfahren nach einem der Ansprüche 7 bis 9, dadurch gekennzeichnet, daß die Veränderung des Pegels des Positioniersignals, wenn sie von einem Mindestwert ausgeht, außerdem so erfolgt, daß dieser Pegel auf einen ausreichenden Wert für die Erfassung dieses Signals in der Zentralstation gelangt.

11. Verfahren nach einem der Ansprüche 9 und 10, dadurch gekennzeichnet, daß die Veränderung des Pegels, um ihn auf einen ausreichenden Wert zu seiner Erfassung durch die Zentralstation zu bringen, auch vom Signal gesteuert wird, das angibt, daß das Positioniersignal nicht im Positionierfenster empfangen wurde.

**Claims**

1. Method for determining the transmission time between remote terminal stations (ONT) and a central terminal station (OLT) in a point-to-multipoint bidirectional transmission network, said method comprising measurement by the central station of the time interval between a reference time for sending of information signals by said central station and reception by said central station of a location signal (SW) sent by a remote station after a time-delay starting from a reference time for reception of said information signals by said remote station so that said location signal is received by said central station in a particular location window not assigned to reception by said central station of information signals, the location window repeating in a regular manner, characterised in that, for a given remote station, said time-delay is variable from an initial value (Tri) such that if the location signal is not received in the first location window, said location signal sending by the remote station is then repeated with a different time-delay until said location signal is received by said central station in one of the successive location windows.

2. Method according to claim 1 characterised in that the width of said location window (Tf) is less than that which would be required to accommodate all intermediate location signal positions between extreme positions respectively representing the remote station nearest the central station and the remote station farthest from the central station.

3. Method according to claim 1 or claim 2 characterised in that, in the case of half-duplex bidirectional transmission on a shared transmission medium, the period in which said location signal is received for said initial value and for any intermediate values between said initial value and the final value (Trf) for which said location signal is received in said window is a period (Te) assigned to the sending of information signals by said central station.

4. Method according to any one of claims 1 to 3 characterised in that the time-delay variation increment is equal to the width of said window.

5. Method according to claim 1 or claim 2 characterised in that, in the case of bidirectional transmission on two separate media, the width of said window is variable and has a first width ($Tr_1$) in a first period and a second width ($Tf_2$) less than the first in a second period after reception of the location signal in the location window having said first width.

6. Method according to claim 5 characterised in that the time-delay increment is equal to said first width in said first period and equal to said second width in said second period.

7. Method according to any one of claims 1 to 6 characterised in that the level of said location signal is adapted to vary from an extreme value to a value such that said central station receives substantially the same level from all the remote stations.

8. Method according to claim 7 characterised in that the direction of variation of the location signal level by a remote station to achieve the required level is determined at said central station and then transmitted to the remote station concerned by means of a level variation control signal.

9. Method according to any one of claims 1 to 8 characterised in that said time-delay variation is controlled by a signal sent by the central station indicating non-reception of the location signal in the location window.

10. Method according to any one of claims 7 to 9 characterised in that if said location signal level is varied from a minimal value it is further varied in order to obtain a level sufficient to enable it to be detected by the central station.

11. Method according to claim 9 or claim 10 characterised in that said level variation to achieve a sufficient level to enable it to be detected by said central station is also commanded by said signal indicating non-reception of said location signal in the location window.

FIG. 1

EP 0 555 596 B1

# FIG. 2

# FIG. 3

# FIG. 4

# FIG. 5

$$Ik = 0$$

$$Ik \leqslant IU \quad \text{non} \rightarrow \text{faute}$$

oui

$$Ik \text{ libre?} \quad \text{non} \rightarrow Ik = Ik + 1$$

oui

$$Id = Ik \rightarrow \text{allocation de.Id}$$

$$Iu = Id + ID \leftarrow \text{non} \quad Id \geqslant ID$$

oui

$$Il = ID$$

$$Iu = Iu + 1$$

$$Iu \text{ libre?} \quad \text{non}$$

oui

allocation de Iu

$$Il = Il + 1 \leftarrow \text{non} \quad Il \text{ libre?}$$

oui

$$Iu = Il \leftarrow \text{non} \quad Id = Il \, ?$$

oui

allocation de Iu

$$Il = Il + 1$$

14